# EUROPEAN PATENT APPLICATION

(11) **EP 3 503 327 A1**
(43) Date of publication of application: **26.06.2019**
(21) Application number: 18213605.1
(22) Date of filing: 18.12.2018
(51) Int. Cl.: H02G 3/32

(54) **HARNESS BRACKET WITH CABLE TIE RETENTION FEATURES**

(30) Priority: 20.12.2017 US 201715848890
(71) Applicant: United Technologies Corporation, Farmington, CT 06032 (US)
(72) Inventor: TROUGHTON, Andre, Windsor Locks, CT 06096 (US); ODELL, Jake, South Windsor, CT 06074 (US); MAUNG, Aung, Clermont, FL 34711 (US)
(74) Representative: Dehns

(57) **Abstract**

A wire harness retention system includes a harness bracket having a cable tie retention feature and a spring clip attached to the harness bracket. A cable tie is wrapped around the spring clip. The cable tie is held in place with the cable tie retention feature on the harness bracket.

## Description

### BACKGROUND

The present disclosure relates to harness brackets, and in particular, to harness brackets with cable tie retention features for use with spring clips.

Gas turbine engines have electrical harnesses made up of wires covered by an overbraid cover. The electrical harnesses provide electrical signals from an aircraft to the engine electronic control units to the engine control hardware and sensors for engine control and monitoring. Harness brackets are attached to the gas turbine engine to hold the wire harnesses in place on the engine. The wire harnesses can be attached to the harness bracket with spring clips.

Spring clips include a base portion that is attached to the harness bracket and two spring arms extending upward from the base portion. A wire harness can be positioned between the spring arms of the spring clip and the spring arms put pressure on the wire harness to hold the wire harness in place. Spring clips come in many sizes to fit different wire harness diameters. Wire harnesses can be quickly inserted into spring clips to hold the wire harnesses in place. However, spring clips are inseparable from the harness bracket and cannot be easily swapped out for a different size. When wire harnesses and spring clips are not sized correctly, many issues can arise. Wire harnesses can slip out of the spring clips and fall out of place on the engine. Further, the wire harnesses can experience chaffing during use when there is a poor fit between the wire harness and the spring clip.

U.S. Publication No. 2013/0323473 shows a prior art harness bracket with spring clips for holding wire harnesses. As seen in the prior art, spring clips are mounted in any manner on harness brackets. This includes mounting spring clips on harness brackets so that portions of the harness bracket extend outward from the spring clip in any direction. This prevents a cable tie or other securing mechanism from being wrapped around the spring clips to hold a wire harness in the spring clips. Further, even if the spring clip is mounted on the harness bracket so that a cable tie or other securing mechanism can be wrapped around the spring clip, there is no way to hold the cable tie or other securing mechanism on the spring clip. The cable tie or other securing mechanism can slip off of the spring clip, which also allows the wire harnesses to slip out of the spring clip.

### SUMMARY

A wire harness retention system includes a harness bracket having a cable tie retention feature and a spring clip attached to the harness bracket. A cable tie is wrapped around the spring clip. The cable tie is held in place with the cable tie retention feature on the harness bracket.

A wire harness retention system includes a harness bracket with base portion having a first tab and a second tab extending away from a first edge of the base portion and a first groove formed between the first tab and the second tab. A spring clip is attached to the harness bracket. A cable tie wrapped around the spring clip. The cable tie is positioned in the groove of the harness bracket between the first tab and the second tab.

A wire harness retention system includes a harness bracket with base portion having a first slot extending through the base portion. A spring clip is attached to the harness bracket. A cable tie is wrapped around the spring clip. The cable tie is positioned in the first slot of the harness bracket.

### BRIEF DESCRIPTION OF THE DRAWINGS

FIG. 1 is perspective view of a wire harness attached to an engine component.
FIG. 2A is a perspective view of a wire harness retention system.
FIG. 2B is a top view of the wire harness retention system of FIG. 2A.
FIG. 2C is a bottom view of the wire harness retention system of FIG. 2A.
FIG. 3A is a perspective view of a first embodiment of a harness bracket with cable tie retention features.
FIG. 3B is a top view of the first embodiment of the harness bracket of FIG. 3A.
FIG. 3C is a perspective view the first embodiment of the harness bracket with a spring clip and a cable tie.
FIG. 4A is a perspective view of a second embodiment of a harness bracket with cable tie retention features.
FIG. 4B is a top view of the second embodiment of the harness bracket of FIG. 4A.
FIG. 4C is a perspective view of the second embodiment of the harness bracket with a spring clip and a cable tie.
FIG. 5A is a perspective view of a third embodiment of a harness bracket with cable tie retention features.
FIG. 5B is a top view of the third embodiment of the harness bracket of FIG. 5A.
FIG. 5C is a perspective view of the third embodiment of the harness bracket with a spring clip and a cable tie.
FIG. 6A is a perspective view of a fourth embodiment of a harness bracket with cable tie retention features.
FIG. 6B is a top view of the fourth embodiment of the harness bracket of FIG. 6A.
FIG. 6C is a perspective view of the fourth embodiment of the harness bracket with a spring clip and a cable tie.

### DETAILED DESCRIPTION

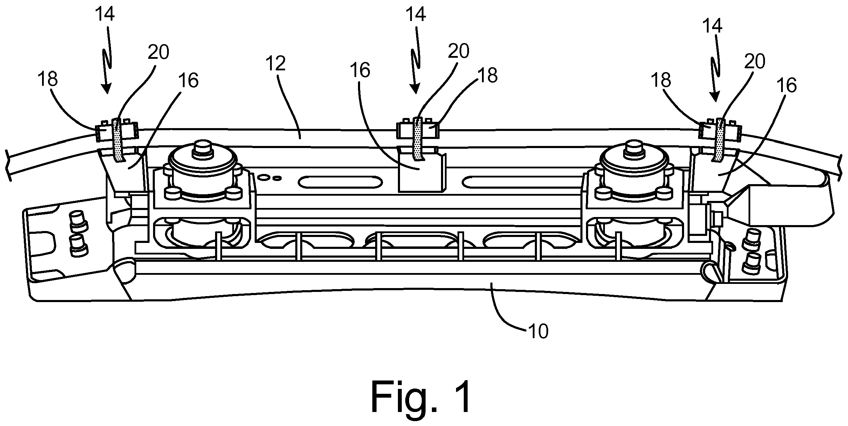

FIG. 1 is perspective view of engine component 10, wire harness 12, and wire harness retention systems 14. Wire harness retention systems 14 include harness brackets 16, spring clips 18, and cable ties 20.

Engine component 10 can be any component in a gas turbine engine to which wire harness 12 is attached. In the embodiment shown in FIG. 1, engine component 10 is a bracket, but engine component 10 can be any gas turbine engine component in alternate embodiments. Wire harness retention systems 14 are positioned along engine component 10. Wire harness retention systems 14 each include harness bracket 16, spring clips 18, and cable ties 20. Harness brackets 16 are positioned along and attached to engine component 10. One spring clip 18 is attached to each harness bracket 16. Wire harness 12 is positioned in spring clips 18 to hold wire harness 12 in place on engine component 10.

Wire harness 12 can vary greatly in size. Positioning wire harness 12 on engine component 10 can be difficult using spring clips 18. Once spring clips 18 are added to engine component 10, it is difficult and costly to remove spring clips 18. If spring clips 18 are not the proper size to fit the diameter of wire harness 12, wire harness 12 can slip out of spring clips 18. To prevent wire harness 12 from falling out of spring clips 18 and to prevent wire harness 12 from chafing against spring clips 18 and any engine components adjacent wire harness 12, cable ties 20 are positioned around spring clips 18. In alternate embodiments, lacing tape or other ties can be used in place of cable ties 20. Cable ties 20 hold wire harness 12 in place in spring clips 18 and prevent wire harness 12 from slipping out of spring clips 18. Harness brackets 16 can include a number of cable tie retention features to hold cable ties 20 in place to prevent cable ties 20 from slipping off of spring clips 18.

In prior art harness brackets and spring clips, a spring clip could be mounted on a harness bracket so that a portion of the harness bracket extended outward from the spring clip in any direction. This would prevent a cable tie from being wrapped around the spring clip to hold a wire harness in the spring clip. Further, even if the spring clip were mounted on the harness bracket so that a cable tie could be wrapped around the spring clip, there would be no way to hold the cable tie on the spring clip. The cable tie could slip off of the spring clip, which would also allow the wire harness to slip out of the spring clip.

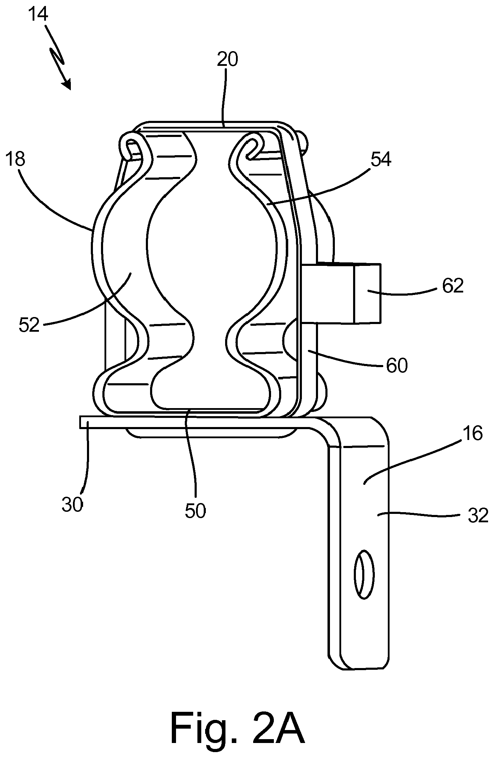

Wire harness retention systems 14 are advantageous over the prior art. Wire harness retention systems 14 have spring clips 18 that are positioned on harness brackets 16 so that cable tie 20 can be wrapped around spring clips 18 and a portion of harness brackets 16. This allows cable tie 20 to hold wire harness 12 in spring clip 18, even if spring clip 18 is not sized to fit the diameter of wire harness 12. Further, harness bracket 16 includes cable tie retention features that hold cable tie 20 in position on spring clip 18 and a portion of harness bracket 16. The cable tie retention features will be discussed in more detail below with reference to FIGS. 2A-6C.

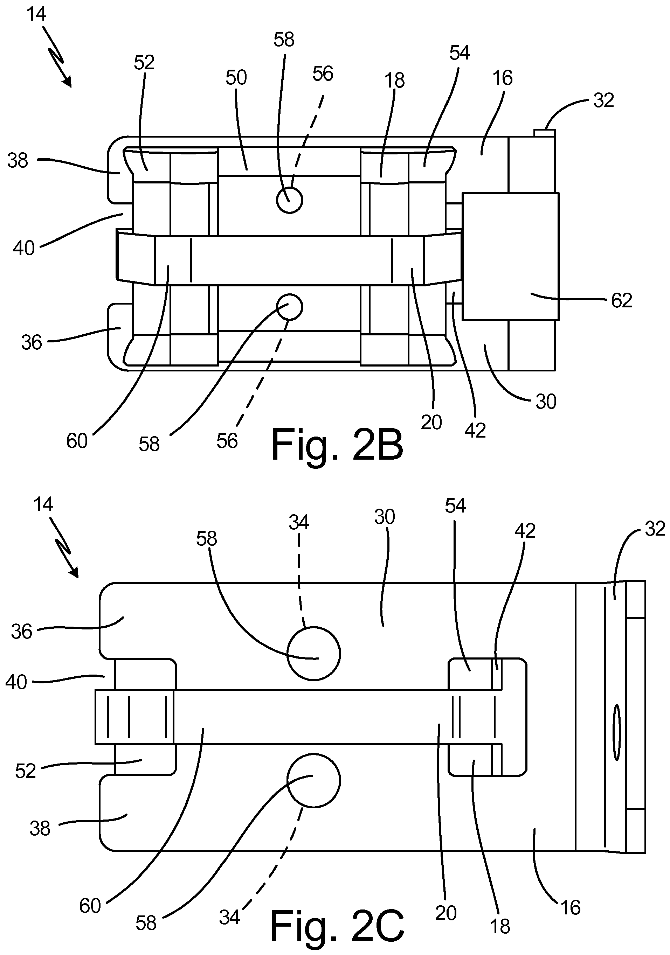

FIG. 2A is a perspective view of wire harness retention system 14. FIG. 2B is a top view of wire harness retention system 14. FIG. 2C is a bottom view of wire harness retention system 14. Wire harness retention system 14 includes harness bracket 16, spring clip 18, and cable tie 20. Harness bracket 16 includes base portion 30, arm portion 32, apertures 34, first tab 36, second tab 38, groove 40, and slot 42. Spring clip 18 includes base 50, first arm 52, second arm 54, apertures 56, and fasteners 58. Cable tie 20 includes tape 60 and head 62.

Wire harness retention system 14 holds a wire harness (not shown in FIGS. 2A-2C for clarity) in position on an engine. Wire harness retention system 14 includes harness bracket 16, spring clip 18, and cable tie 20. Wire harness retention system 14 shown in FIGS. 2A-2C includes the same components as wire harness retention systems 14 shown in FIG. 1, however the shape of harness bracket 16 has changed. Wire harness retention system 14 can include any harness bracket 16, any spring clip 18, and any cable tie 20 or other suitable tie. Spring clip 18 is mounted to harness bracket 16. Cable tie 20 is wrapped around spring clip 18 and a portion of harness bracket 16. Harness bracket 16 includes cable tie retention features to hold cable tie 20 in place on spring clip 18 and harness bracket 16.

Harness bracket 16 includes base portion 30 and arm portion 32. Spring clip 18 is attached to base portion 30. Apertures 34 extend through base portion 30. Arm potion 32 extends away from base portion 30 and can be attached to an engine to mount harness bracket 16 to an engine. Harness bracket 16 includes cable tie retention features. Cable tie retention features includes first tab 36, second tab 38, groove 40, and slot 42.

First tab 36, second tab 38, and groove 40 collectively form a first cable tie retention feature, and slot 42 forms a second cable tie retention feature. First tab 36, second tab 38, and groove 40 are used at edges of harness bracket 16, and slot 42 is used at an internal portion of harness bracket 16. In the embodiment shown in FIGS. 2A-2C, first tab 36, second tab 38, and groove 40 are positioned on a first edge of base portion 30 of harness bracket 16. First tab 36 is a flange that projects outward from the first edge of base portion 30 and is positioned on a first side of base portion 30. Second tab 38 is a flange that projects outward from the first edge of base portion 30 and is positioned on a second side of base portion 30. Groove 40 is formed between first tab 36 and second tab 38 on the first edge of base portion 30 of harness bracket 16. Slot 42 is positioned on an internal portion of base portion 30 of harness bracket 16. Slot 42 is an opening that extends through base portion 30 on the internal portion of base portion 30.

Spring clip 18 includes base 50, first arm 52, and second arm 54. First arm 52 and second arm 54 extend upward from base 50. First arm 52 and second arm 54 are spring arms that are curved to fit a wire harness. First arm 52 and second arm 54 each have a first curved portion and a second curved portion. The first curved portions of first arm 52 and second arm 54 are positioned adjacent to base 50 of spring clip 18. The second curved portions of first arm 52 and second arm 54 are positioned away from base 50 of spring clip 18 and are sized to retain the wire harness. Apertures 56 extend through base 50 of spring clip 18. Fasteners 58 extend through apertures 56 of spring clip 18 and apertures 34 of harness bracket 16 to attach spring clip 18 to harness bracket 16.

Cable tie 20 includes tape 60 and head 62. Tape 60 of cable tie 20 can be wrapped around spring clip 18 and part of the base portion 30 of harness bracket 16 and can then be inserted into head 62. Tape 60 can be pulled through head 62 to tighten cable tie 20 to clamp cable tie 20 around spring clip 18. Tape 60 of cable tie 20 is positioned in groove 40 of harness bracket 16 between first tab 36 and second tab 38, and tape 60 of cable tie 20 extends through and is positioned in slot 42 of harness bracket 16.

First tab 36 and second tab 38 of harness bracket 16 hold tape 60 of cable tie 20 in position in groove 40 of harness bracket 16. Groove 40 is sized to fit the width of tape 60 of cable tie 20 in groove 40. The edges of slot 42 likewise hold tape 60 of cable tie 20 in position in slot 42 of harness bracket 16. Slot 42 is sized to fit the width of tape 60 of cable tie 20 in slot 42. Tape 60 of cable tie 20 should be positioned around a center of spring clip 18 to hold spring clip 18 closed. First tab 36 and second tab 38 form groove 40 at a middle of spring clip 18 and slot 42 is positioned in a middle of spring clip 18. First tab 36, second tab 38, groove 40, and slot 42 hold tape 60 of cable tie 20 in position in the middle of spring clip 18 and prevent cable tie 20 from slipping off of spring clip 18.

Positioning cable tie 20 around spring clip 18 and base portion 30 of harness bracket 16 prevents a wire harness from slipping out of spring clip 18. Cable tie 20 can be tightened to pull first arm 52 and second arm 54 of spring clip 18 together to tighten them around the wire harness positioned in spring clip 18. This will prevent the wire harness from slipping out of spring clip 18. Further, tightening first arm 52 and second arm 54 of spring clip 18 around the wire harness positioned in spring clip 18 will prevent the wire harness from moving in spring clip 18. This adds rigidity to spring clips 18 and better guides and routes the wire harness across the engine. This will prevent chaffing of the wire harness, as the wire harness will not rub against edges of harness bracket 16, spring clip 18, or other components adjacent to the wire harness in the engine.

Spring clip 18 is sized to fit the diameter of the wire harness. It is time consuming and costly to remove spring clip 18 from harness bracket 16 to switch the size of spring clip 18 if the diameter of the wire harness changes. Wrapping cable tie 20 around spring clip 18 allows spring clip 18 to retain wire harnesses with a wide range of diameters. Larger spring clips 18 can be positioned on harness brackets 16 to accommodate wire harnesses with both larger and smaller diameters. This creates flexibility in the design and manufacture of the engine, as spring clips 18 do not need to be perfectly sized to the wire harnesses. Further, if the wire harness is changed, spring clip 18 does not have to be changed to accommodate the new wire harness.

Further, wrapping cable tie 20 around spring clip 18 and a part of harness bracket 16 allows issues of misfit between spring clips 18 and the wire harness to be dealt with quickly. This is particularly advantageous during the development of engines and the first built of an engine. Further, this is advantageous when new harness brackets 16 are being used. Wrapping cable tie 20 around spring clip 18 and a part of harness bracket 16 allows the engine to continue to be built, or testing to continue to be completed, without having to switch out a harness bracket or a spring clip.

Further, wrapping cable tie 20 around spring clip 18 and a part of harness bracket 16 mistake-proofs the fit between spring clip 18 and the wire harness. Cable tie 20 cinches spring clip 18 around the wire harness to ensure a secure fit between spring clip 18 and the wire harness. When cable tie 20 is wrapped around spring clip 18, a tool can be used to cinch cable tie 20. The tool can control what tension cable tie 20 should be adjusted too. This allows cable tie 20 to be cinched to the same fit and tension around spring clip 18 and a part of harness bracket 16, regardless of the diameter of the wire harness that is positioned in spring clip 18.

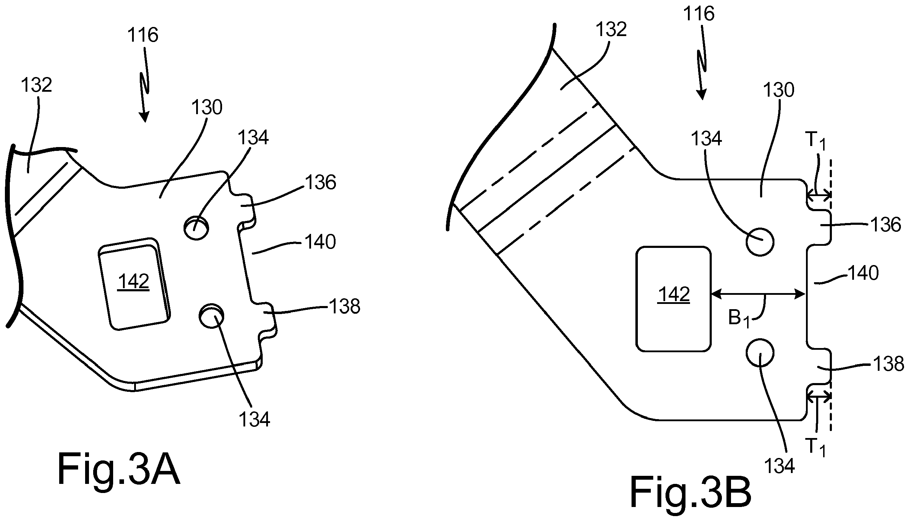

The cable tie retention features, including first tab 36, second tab 38, groove 40, and slot 42, prevent cable tie 20 from slipping off of spring clip 18. FIGS. 3A-6C show different embodiments of a harness bracket with cable tie retention features.

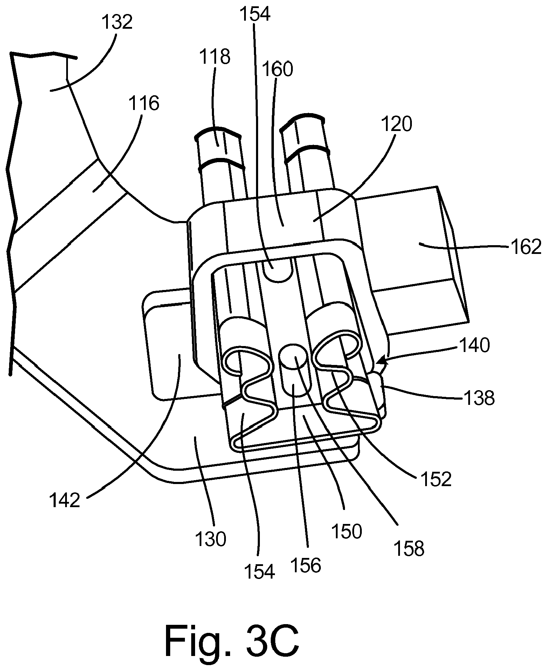

FIGS. 3A-3C show harness bracket 116. Harness bracket 116 is a first embodiment of a harness bracket having a tab/groove cable tie retention feature and a slot cable tie retention feature. FIG. 3A is a perspective view of harness bracket 116. FIG. 3B is a top view of harness bracket 116. FIG. 3C is a perspective view of harness bracket 116 with spring clip 118 and cable tie 120. FIGS. 3A-3B shows harness bracket 116 and FIG. 3C shows wire harness retention system 114, including harness bracket 116, spring clip 118 and cable tie 120. Harness bracket 116 includes base portion 130, arm portion 132, apertures 134, first tab 136, second tab 138, groove 140, and slot 142. Spring clip 118 includes base 150, first arm 152, second arm 154, apertures 156, and fasteners 158. Cable tie 120 includes tape 160 and head 162. FIG. 3B shows tab length T₁ and base length B₁.

Wire harness retention system 114 includes harness bracket 116, spring clip 118, and cable tie 120. Harness bracket 116 includes base portion 130 and arm portion 132 that extends away from base portion 130. Apertures 134 are positioned on base portion 130 of harness bracket 116. Harness bracket 116 includes cable tie retention features, including first tab 136, second tab 138, groove 140, and slot 142.

First tab 136 and second tab 138 form groove 140 that is positioned on a first edge of base portion 130 of harness bracket 116. First tab 136 is a flange that projects outward from base portion 130 and is positioned on a first side of base portion 130. Second tab 138 is a flange that project outward from base portion 130 and is positioned on a second side of base portion 130. Groove 140 is formed between first tab 132 and second tab 138 on the first edge of base portion 140 of harness bracket 116. Slot 142 is positioned on an internal portion of base portion 130. Slot 142 is an opening that extends through base portion 130 on the internal portion of base portion 130.

First tab 136 and second tab 138 have a tab length T₁. Tab length T₁ is the length that first tab 136 and second tab 138 extend outwards from base portion 130 of harness bracket 116. Base portion 130 has a base length B₁. Base length B₁ is the length of base portion 130 from groove 140 to slot 142.

As shown in FIG. 3C, spring clip 118 is positioned on and attached to harness bracket 116. Spring clip 118 includes base 150 that is positioned on and attached to base portion 130 of harness bracket 118. Spring clip 118 further includes first arm 152 and second arm 154 extending upwards from base 150 of spring clip 118. Spring clip 118 further includes apertures 156 that extend through base 150 of spring clip 118. Fasteners 158 extend through apertures 156 of spring clip 118 and apertures 134 of harness bracket 116 to attach spring clip 118 to harness bracket 116. Cable tie 120 is wrapped around spring clip 118. Cable tie 120 includes tape 160 and head 162. Tape 160 is positioned in groove 140 and extends through and is positioned in slot 142. First tab 136, second tab 138, groove 140, and slot 142 hold tape 160 of cable tie 120 in position on spring clip 118.

Tab length T₁ of first tab 136 and second tab 138, and base length B₁ of harness bracket 116 are sized depending on the size of spring clip 118. Tab length T₁ is sized depending on the curvature of first arm 152 of spring clip 118. First arm 152 of spring clip 118 has a first curved portion and a second curved portion. The first curved portion of first arm 152 has an innermost point and an outermost point on its curvature. Tab length T₁ is sized to be larger than the distance between the innermost point and the outermost point of the first curved portion of first arm 152. When cable tie 120 is positioned on spring clip 118, it will come into contact with the outermost point of the first curved portion of first arm 152 of spring clip 118. Tab length T₁ is sized so that first tab 136 and second tab 138 extend past the outermost point of the first curved portion of first arm 152. This allows first tab 136 and second tab 138 to prevent cable tie 120 from slipping off of spring clip 118.

Base length B₁ is sized depending on the length of base 150 of spring clip 118. Base length B₁ is sized to be the same as or slightly smaller than the length of base 150 of spring clip 118. This allows spring clip 118 to be positioned on base portion 130 of harness bracket 116 so that first arm 152 and second arm 154 start to curve upwards away from base 150 of spring clip 118 at the edge of groove 140 and the edge of slot 142. When cable tie 120 is wrapped around spring clip 118 and a portion of base portion 130 of harness bracket 116, it will wrap around the smooth curved portions of spring clip 118. This prevents chaffing to cable tie 120 when cable tie 120 is positioned on spring clip 118 and a portion of base portion 130 of harness bracket 116.

Cable tie retention features, including first tab 136, second tab 138, groove 140, and slot 142, hold a wire harness in spring clip 118 and prevent chaffing to the wire harness. First tab 136 and second tab 138 hold tape 160 of cable tie 120 in position in groove 140. The edges of slot 142 hold tape 160 of cable tie 120 is position in slot 142. Cable tie 120 cinches spring clip 118 around the wire harness to ensure a tight fit between spring clip 118 and the wire harness.

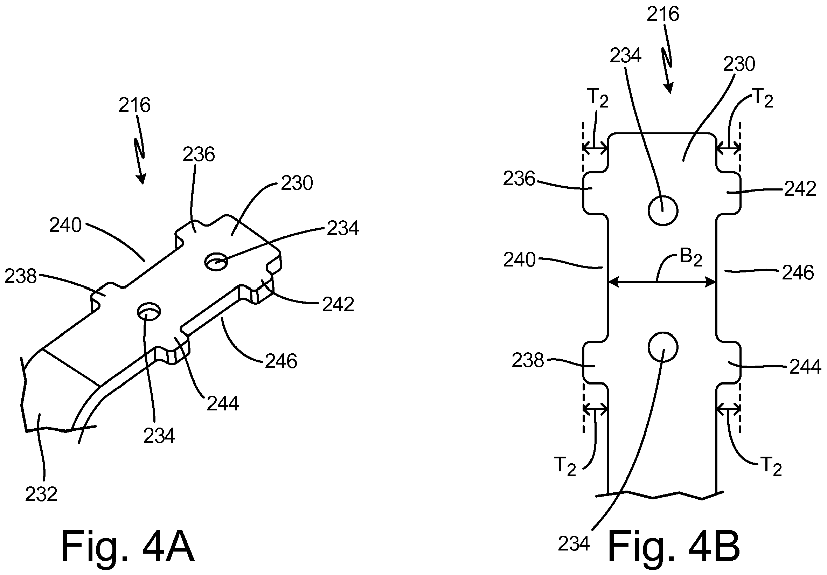

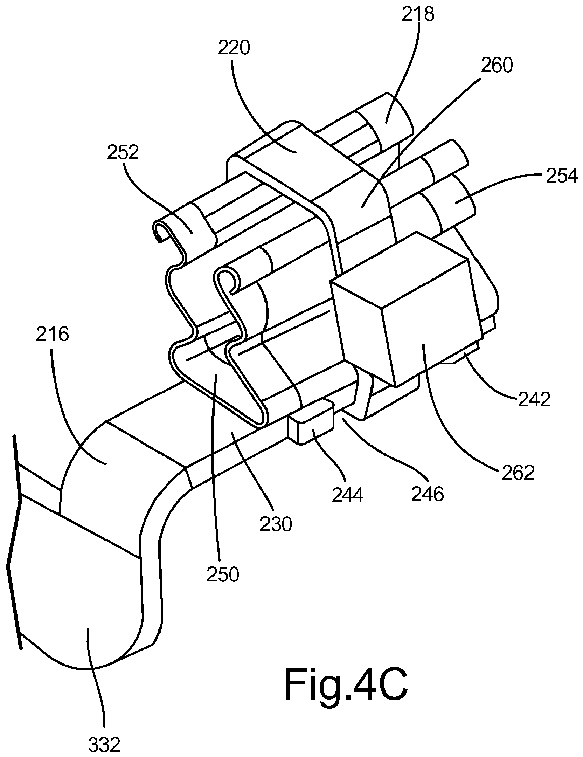

FIGS. 4A-4C show harness bracket 216. Harness bracket 216 is a second embodiment of a harness bracket having two tab/groove cable tie retention features. FIG. 4A is a perspective view of harness bracket 216. FIG. 4B is a top view of harness bracket 216. FIG. 4C is a perspective view of harness bracket 216 with spring clip 218 and cable tie 220. FIGS. 4A-4B shows harness bracket 216 and FIG. 4C shows wire harness retention system 214, including harness bracket 216, spring clip 218 and cable tie 220. Harness bracket 216 includes base portion 230, arm portion 232, apertures 234, first tab 236, second tab 238, groove 240, third tab 242, fourth tab 244, and groove 246. Spring clip 218 includes base 250, first arm 252, second arm 254, apertures 256, and fasteners 258. Cable tie 220 includes tape 260 and head 262. FIG. 4B shows tab length T₂ and base length B₂.

Wire harness retention system 214 includes harness bracket 216, spring clip 218, and cable tie 220. Harness bracket 216 includes base portion 230 and arm portion 232 that extend away from base portion 230. Apertures 234 are positioned on base portion 230 of harness bracket 216. Harness bracket 216 includes cable tie retention features, including first tab 236, second tab 238, groove 240, third tab 242, fourth tab 244, and groove 246.

First tab 236 and second tab 238 form groove 240 that is positioned on a first edge of base portion 230 of harness bracket 216. First tab 236 is a flange that projects outward from base portion 230 and is positioned on a first end of base portion 230. Second tab 238 is a flange that projects outward from base portion 230 and is positioned on a second end of base portion 230. Groove 240 is formed between first tab 232 and second tab 238 on the first edge of base portion 230 of harness bracket 216. Third tab 242 and fourth tab 244 form groove 246 that is positioned on a second edge of base portion 230 of harness bracket 216. Third tab 242 is a flange that projects outward from base portion 230 and is positioned on the first end of base portion 230. Fourth tab 244 is a flange that projects outward from base portion 230 and is positioned on the second end of base portion 230. Groove 246 is formed between third tab 242 and fourth tab 244 on the second edge of base portion 230 of harness bracket 216.

First tab 236, second tab 238, third tab 242, and fourth tab 244 have a tab length T₂. Tab length T₂ is the length that first tab 236 second tab 238, third tab 242, and fourth tab 244 extend outwards from base portion 230 of harness bracket 216. Base portion 230 has a base length B₂. Base length B₂ is the length of base portion 230 from groove 240 to groove 246.

As shown in FIG. 4C, spring clip 218 is positioned on and attached to harness bracket 216. Spring clip 218 includes base 250 that is positioned on and attached to base portion 230 of harness bracket 218. Spring clip 218 further includes first arm 252 and second arm 254 extending upwards from base 250 of spring clip 218. Spring clip 218 further includes apertures 256 that extend through base 250 of spring clip 218. Fasteners 258 extend through apertures 256 of spring clip 218 and apertures 234 of harness bracket 216 to attach spring clip 218 to harness bracket 216. Cable tie 220 is wrapped around spring clip 218. Cable tie 220 includes tape 260 and head 262. Tape 260 is positioned in groove 240 and extends through and is positioned in slot 242. First tab 236, second tab 238, groove 240, third tab 242, fourth tab 244, and groove 246 hold tape 260 of cable tie 220 in position on spring clip 218.

Tab length T₂ of first tab 236, second tab 238, third tab 242, and fourth tab 244 and base length B₂ of harness bracket 216 are sized depending on the size of spring clip 218. Tab length T₂ is sized depending on the curvature of first arm 252 and second arm 254 of spring clip 218. First arm 252 and second arm 254 of spring clip 218 each have a first curved portion and a second curved portion. The first curved portion of first arm 252 and second arm 254 has an innermost point and an outermost point on its curvature. Tab length T₂ is sized to be larger than the distance between the innermost point and the outermost point of the first curved portion of first arm 252 and second arm 254. When cable tie 220 is positioned on spring clip 218, it will come into contact with the outermost point of the first curved portion of first arm 252 and second arm 254 of spring clip 218. Tab length T₂ is sized so that first tab 236, second tab 238, third tab 242, and fourth tab 244 extend past the outermost point of the first curved portion of first arm 252 and second arm 254. This allows first tab 236, second tab 238, third tab 242, and fourth tab 244 to prevent cable tie 220 from slipping off spring clip 218.

Base length B₂ is sized depending on the length of base 250 of spring clip 218. Base length B₂ is sized to be the same as or slightly smaller than the length of base 250 of spring clip 218. This allows spring clip 218 to be positioned on base portion 230 of harness bracket 216 so that first arm 252 and second arm 254 start to curve upwards away from base 250 of spring clip 218 at the edge of groove 240 and the edge of groove 246. When cable tie 220 is wrapped around spring clip 218 and a portion of base portion 230 of harness bracket 216, it will wrap around the smooth curved portions of spring clip 218. This prevents chaffing to cable tie 220 when cable tie 220 is positioned on spring clip 218 and a portion of base portion 230 of harness bracket 216.

Cable tie retention features, including first tab 236, second tab 238, groove 240, third tab 242, fourth tab 244, and groove 246, hold a wire harness in spring clip 218 and prevent chaffing to the wire harness. First tab 236 and second tab 238 hold tape 260 of cable tie 220 in position in groove 240. Third tab 242 and fourth tab 244 hold tape 260 of cable tie 220 in position in groove 246. Cable tie 220 cinches spring clip 218 around the wire harness to ensure a tight fit between spring clip 218 and the wire harness.

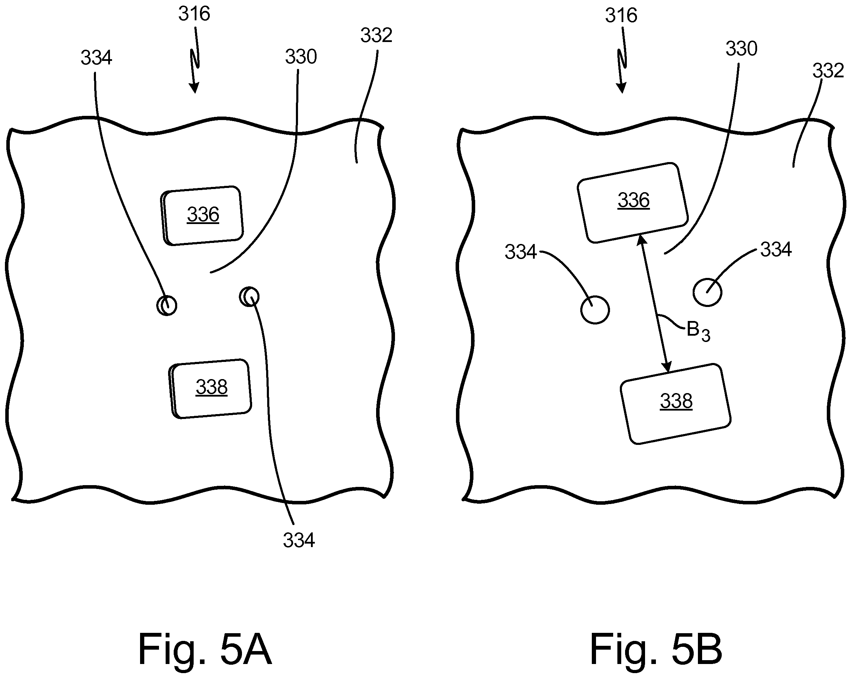

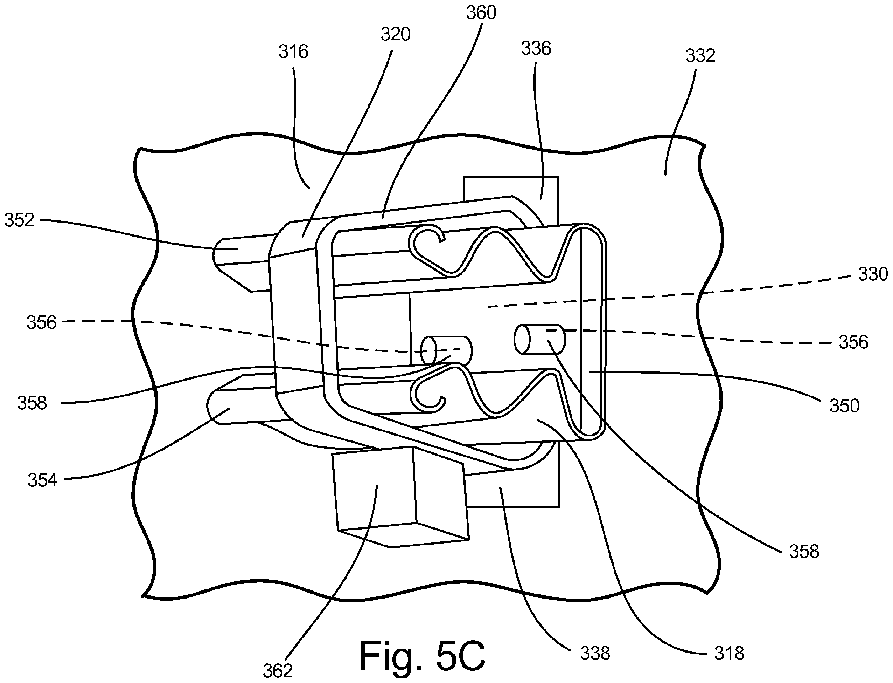

FIGS. 5A-5C show harness bracket 316. Harness bracket 316 is a third embodiment of a harness bracket having two slot cable tie retention features. FIG. 5A is a perspective view of harness bracket 316. FIG. 5B is a top view of harness bracket 316. FIG. 5C is a perspective view of harness bracket 316 with spring clip 318 and cable tie 320. FIGS. 5A-5B shows harness bracket 316 and FIG. 5C shows wire harness retention system 314, including harness bracket 316, spring clip 318 and cable tie 320. Harness bracket 316 includes base portion 330, arm portion 332, apertures 334, slot 336, and slot 338. Spring clip 318 includes base 350, first arm 352, second arm 354, apertures 356, and fasteners 358. Cable tie 320 includes tape 360 and head 362. FIG. 5B shows base length B₃.

Wire harness retention system 314 includes harness bracket 316, spring clip 318, and cable tie 320. Harness bracket 316 includes base portion 330 and arm portion 332 that extends away from base portion 330. Apertures 334 are positioned on base portion 330 of harness bracket 316. Harness bracket 316 includes cable tie retention features, including slot 336 and slot 338.

Slot 336 is positioned on a first side of base portion 330. Slot 336 is an opening that extends through base portion 330 on the first side of base portion 330. Slot 338 is positioned on a second side of base portion 330. Slot 338 is an opening that extends through base portion 330 on the second side of base portion 330. Base portion 330 has a base length B₃. Base length B₃ is the length of base portion 330 from slot 336 to slot 338.

As shown in FIG. 5C, spring clip 318 is positioned on and attached to harness bracket 316. Spring clip 318 includes base 350 that is positioned on and attached to base portion 330 of harness bracket 318. Spring clip 318 further includes first arm 352 and second arm 354 extending upwards from base 350 of spring clip 318. Spring clip 318 further includes apertures 356 that extend through base 350 of spring clip 318. Fasteners 358 extend through apertures 356 of spring clip 318 and apertures 334 of harness bracket 316 to attach spring clip 318 to harness bracket 316. Cable tie 320 is wrapped around spring clip 318. Cable tie 320 includes tape 360 and head 362. Tape 360 extends through and is positioned in slot 336 and extends through and is positioned in slot 338. Slot 336 and slot 338 hold tape 360 of cable tie 320 in position on spring clip 318.

Base length B₃ of harness bracket 316 is sized depending on the size of spring clip 318. Base length B₃ is sized depending on the length of base 350 of spring clip 318. Base length B₃ is sized to be the same as or slightly smaller than the length of base 350 of spring clip 318. This allows spring clip 318 to be positioned on base portion 330 of harness bracket 316 so that first arm 352 and second arm 354 start to curve upwards away from base 350 of spring clip 318 at the edge of slot 336 and the edge of slot 338. When cable tie 320 is wrapped around spring clip 318 and a portion of base portion 330 of harness bracket 316, it will wrap around the smooth curved portions of spring clip 318. This prevents chaffing to cable tie 320 when cable tie 320 is positioned on spring clip 318 and a portion of base portion 330 of harness bracket 316.

Cable tie retention features, including slot 336 and slot 338, hold a wire harness in spring clip 318 and prevent chaffing to the wire harness. The edges of slot 336 hold tape 360 of cable tie 320 in position in slot 336. The edges of slot 338 hold tape 360 of cable tie 320 is position in slot 338. Cable tie 320 cinches spring clip 318 around the wire harness to ensure a tight fit between spring clip 318 and the wire harness.

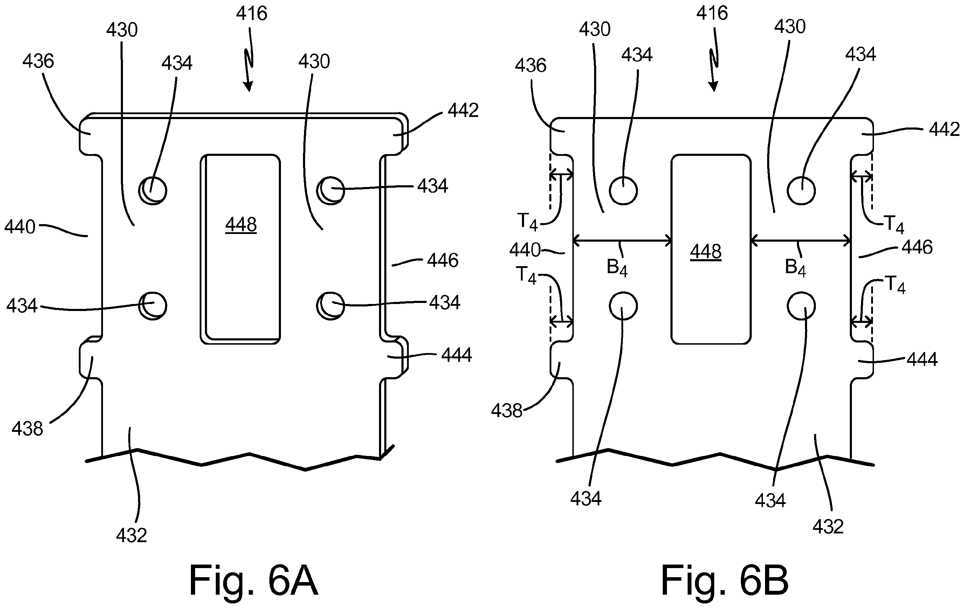

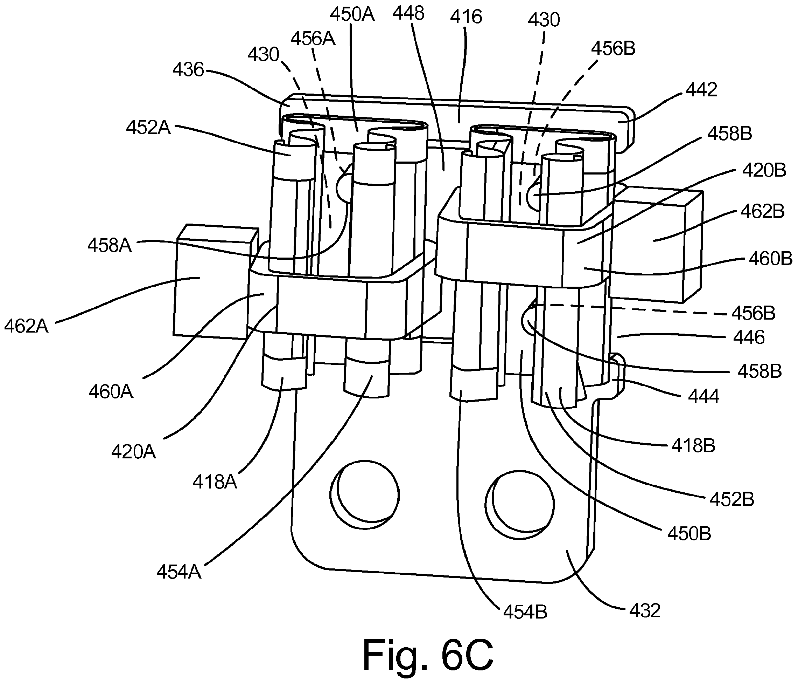

FIGS. 6A-6C show harness bracket 416. Harness bracket 416 is a fourth embodiment of a harness bracket having two tab/groove cable tie retention features and a slot cable tie retention feature. Harness bracket 416 has two spring clips 418A and 418B positioned on it. FIG. 6A is a perspective view of harness bracket 416. FIG. 6B is a top view of harness bracket 416. FIG. 6C is a perspective view of harness bracket 416 with two spring clips 418A and 418B and two cable ties 420A and 420B. FIGS. 6A-6B shows harness bracket 416 and FIG. 6C shows wire harness retention system 414, including harness bracket 416, spring clips 418A and 418B, and cable ties 420A and 420B. Harness bracket 416 includes base portion 430, arm portion 432, apertures 434, first tab 436, second tab 438, groove 440, third tab 442, fourth tab 444, groove 446, and slot 448. Spring clip 418A includes base 450A, first arm 452A, second arm 454A, apertures 456A, and fasteners 458A. Spring clip 418B includes base 450B, first arm 452B, second arm 454B, apertures 456B, and fasteners 458B. Cable tie 420A includes tape 460A and head 462A. Cable tie 420B includes tape 460B and head 462B. FIG. 6B shows tab length T₄ and base length B₄.

Wire harness retention system 414 includes harness bracket 416, spring clips 418A and 418B, and cable ties 420A and 420B. Harness bracket 416 includes base portion 430 and arm portion 432 that extends away from base portion 430. Apertures 434 are positioned on base portion 430 of harness bracket 416. Harness bracket 416 includes cable tie retention features, including first tab 436, second tab 438, groove 440, third tab 442, fourth tab 444, groove 446, and slot 448.

First tab 436 and second tab 438 form groove 440 that is positioned on a first edge of base portion 430 of harness bracket 416. First tab 436 is a flange that projects outward from base portion 430 and is positioned on a first end of base portion 430. Second tab 438 is a flange that projects outward from base portion 430 and is positioned on a second end of base portion 430. Groove 440 is formed between first tab 432 and second tab 438 on the first edge of base portion 430 of harness bracket 416. Third tab 442 and fourth tab 444 form groove 446 that is positioned on a second edge of base portion 430 of harness bracket 416. Third tab 442 is a flange that projects outward from base portion 430 and is positioned on a first end of base portion 430. Fourth tab 444 is a flange that projects outward from base portion 430 and is positioned on a second end of base portion 430. Groove 446 is formed between third tab 442 and fourth tab 444 on the second edge of base portion 430 of harness bracket 416. Slot 448 is positioned on an internal portion of base portion 430. Slot 448 is an opening that extends through base portion 430 on the internal portion of base portion 430.

First tab 436, second tab 438, third tab 442, and fourth tab 444 have a tab length T₄. Tab length T₄ is the length that first tab 436, second tab 438, third tab 442, and fourth tab 444 extend outwards from base portion 430 of harness bracket 416. Base portion 430 has a base length B₄. Base length B₄ is the length of base portion 430 from groove 440 to slot 448 and from groove 446 to slot 448.

As shown in FIG. 6C, spring clips 418A and 418B are positioned on and attached to harness bracket 416. Spring clip 418A includes base 450A that is positioned on and attached to a first side of base portion 430 of harness bracket 418. Spring clip 418A further includes first arm 452A and second arm 454A extending upwards from base 450A of spring clip 418A. Spring clip 418A further includes apertures 456A that extend through base 450A of spring clip 418A. Fasteners 458A extend through apertures 456A of spring clip 418A and apertures 434 of harness bracket 416 to attach spring clip 418 to harness bracket 416. Spring clip 418B includes base 450B that is positioned on and attached to a second side of base portion 430 of harness bracket 418. Spring clip 418B further includes first arm 452B and second arm 454B extending upwards from base 450B of spring clip 418B. Spring clip 418B further includes apertures 456B that extend through base 450B of spring clip 418B. Fasteners 458B extend through apertures 456B of spring clip 418B and apertures 434 of harness bracket 416 to attach spring clip 418B to harness bracket 416. Cable tie 420A is wrapped around spring clip 418A. Cable tie 420A includes tape 460A and head 462A. Tape 460A is positioned in groove 440 and extends through and is positioned in slot 448. First tab 436, second tab 438, groove 440, and slot 448 hold tape 460A of cable tie 420A in position on spring clip 418A. Cable tie 420B is wrapped around spring clip 418B. Cable tie 420B includes tape 460B and head 462B. Tape 460B is positioned in groove 446 and extends through and is positioned in slot 448. First tab 4442, second tab 444, groove 446, and slot 448 hold tape 460B of cable tie 420B in position on spring clip 418B.

Tab length T₄ of first tab 436, second tab 438, third tab 442, and fourth tab 444, and base length B₄ of harness bracket 416 are sized depending on the size of spring clips 418A and 418B. Tab length T₄ is sized depending on the curvature of first arms 452A and 452B of spring clips 418A and 418B. First arms 452A and 452B of spring clip 418A and 418B have a first curved portion and a second curved portion. The first curved portion of first arms 452A and 452B have an innermost point and an outermost point on their curvature. Tab length T₄ is sized to be larger than the distance between the innermost point and the outermost point of the first curved portion of first arms 452A and 452B. When cable ties 420A and 420B are positioned on spring clips 418A and 418B, they will come into contact with the outermost point of the first curved portion of first arms 452A and 452B of spring clips 418A and 418B. Tab length T₄ is sized so that first tab 436, second tab 438, third tab 442, and fourth tab 444 extend past the outermost point of the first curved portion of first arms 452A and 454B. This allows first tab 436, second tab 438, third tab 442, and fourth tab 444 to prevent cable ties 420A and 420B from slipping of spring clips 418A and 418B.

Base length B₄ is sized depending on the length of bases 450A and 450B of spring clips 418A and 418B. Base length B₄ is sized to be the same as or slightly smaller than the length of bases 450A and 450B of spring clips 418A and 418B. This allows spring clips 418A and 418B to be positioned on base portion 430 of harness bracket 416 so that first arms 452A and 454B and second arms 454A and 454B start to curve upwards away from bases 450A and 450B of spring clips 418A and 418B at the edge of groove 440, the edge of groove 446, and the edge of slot 448. When cable ties 420A and 420B are wrapped around spring clips 418A and 418B and a portion of base portion 430 of harness bracket 416, they will wrap around the smooth curved portions of spring clips 418A and 418B. This prevents chaffing to cable ties 420A and 420B when cable ties 420A and 420B are positioned on spring clips 418A and 418B and a portion of base portion 430 of harness bracket 416, wrapping cable ties 420A and 420B around smooth curved portions of spring clips 418A and 418B instead of abrupt edges of harness bracket 430.

Cable tie retention features, including first tab 436, second tab 438, groove 440, third tab 442, fourth tab 444, groove 446, and slot 448, hold a wire harness in spring clips 418A and 418B and prevent chafing to the wire harness. First tab 436 and second tab 438 hold tape 460 of cable tie 420 in position in groove 440. Third tab 4442 and fourth tab 444 hold tape 460 of cable tie 420 in position in groove 446. The edges of slot 448 hold tape 460 of cable tie 420 is position in slot 448. Cable tie 420 cinches spring clip 418 around the wire harness to ensure a tight fit between spring clip 418 and the wire harness.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A wire harness retention system comprising:
a harness bracket having a cable tie retention feature;
a spring clip attached to the harness bracket; and
a cable tie wrapped around the spring clip, wherein the cable tie is held in place with the cable tie retention feature on the harness bracket.

2. The wire harness retention system of claim 1, wherein the cable tie retention feature includes a slot extending through the harness bracket, and wherein, optionally, the slot is sized to fit the width of the cable tie, and wherein the cable tie extends through and is positioned in the slot in the harness bracket.

3. The wire harness retention system of claim 1 or 2, wherein the cable tie retention feature includes a groove formed between a first tab and a second tab extending away from an edge of the harness bracket.

4. The wire harness retention system of claim 3, wherein the groove is sized to fit the width of the cable tie, and wherein the cable tie is positioned in the groove between the first tab and the second tab.

5. The wire harness retention system of claim 1 wherein:
the harness bracket is a harness bracket with base portion having a first tab and a second tab extending away from a first edge of the base portion and a first groove formed between the first tab and the second tab; and
the cable tie is positioned in the groove of the harness bracket between the first tab and the second tab.

6. The wire harness retention system of claim 8, wherein the harness bracket further comprises:
a third tab and a fourth tab extending away from a second edge of the base portion and a second groove formed between the third tab and the fourth tab.

7. The wire harness retention system of claim 6, wherein the third tab and the fourth tab have a tab length T that is greater than the length between the innermost point and the outermost point of the first curved portion and the second curved portion of the first arm and the second arm of the spring clip.

8. The wire harness retention system of claim 6 or 7, wherein the base portion of the harness bracket have a base length B from the first groove to the second groove that is equal to or lesser than the length of the base of the spring clip

9. The wire harness retention system of any one of claims 5 to 8, wherein the harness bracket further includes a slot extending through the base portion of the harness bracket, and wherein, optionally, the base portion of the harness bracket have a base length B from the first groove to the slot that is equal to or lesser than the length of the base of the spring clip.

10. The wire harness retention system of claim 1, wherein:
the harness bracket is a harness bracket with base portion having a first slot extending through the base portion; and
the cable tie is positioned in the first slot of the harness bracket.

11. The wire harness retention system of any preceding claim, wherein the spring clip further comprises:
a base;
a first arm extending upwards from the base; and
a second arm extending upwards from the base;
wherein the first arm and the second arm have a first curved portion and a second curved portion; and
wherein the first curved portion and the second curved have an innermost point and an outermost point of the first curved portion and the second curved portion.

12. The wire harness retention system of claim 10 or 11, wherein the harness bracket further includes a second slot extending through the base portion, and wherein, optionally, the base portion of the harness bracket have a base length B from the first slot to the second slot that is equal to or lesser than the length of the base of the spring clip.

13. The wire harness retention system of any one of claims 10 to 12, wherein the harness bracket further comprises:
a first tab and a second tab extending away from a first edge of the base portion and a groove formed between the first tab and the second tab.

14. The wire harness retention system of claim 11 when read on claim 5 or claim 13, wherein the first tab and the second tab have a tab length T that is greater than the length between the innermost point and the outermost point of the first curved portion and the second curved portion of the first arm and the second arm of the spring clip.

15. The wire harness retention system of claim 13, wherein the base portion of the harness bracket have a base length B from the first slot to the groove that is equal to or lesser than the length of the base of the spring clip
